(19) Europäisches Patentamt
European Patent Office
Office européen des brevets

(11) **EP 4 708 336 A1**

(12) **EUROPEAN PATENT APPLICATION**
published in accordance with Art. 153(4) EPC

(43) Date of publication:
**11.03.2026  Bulletin 2026/11**

(21) Application number: **24831522.8**

(22) Date of filing: **24.05.2024**

(51) International Patent Classification (IPC):
**H01C 7/04** *(2006.01)*    **C04B 35/01** *(2006.01)*

(52) Cooperative Patent Classification (CPC):
**C04B 35/01; H01C 7/04**

(86) International application number:
**PCT/JP2024/019264**

(87) International publication number:
**WO 2025/004651 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.06.2023  JP 2023107328**

(71) Applicant: **Murata Manufacturing Co., Ltd.
Nagaokakyo-shi, Kyoto 617-8555 (JP)**

(72) Inventors:
• **SUNAHARA, Masataka
Nagaokakyo-shi, Kyoto 617-8555 (JP)**
• **MITO, Kengo
Nagaokakyo-shi, Kyoto 617-8555 (JP)**
• **HOSOYA, Takaou
Nagaokakyo-shi, Kyoto 617-8555 (JP)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **NEGATIVE CHARACTERISTIC THERMISTOR**

(57)    A negative temperature coefficient thermistor includes: a ceramic base body composed of a ceramic composition containing Mn, Ni, and Fe; and an outer electrode provided in an end portion of the ceramic base body. The outer electrode includes an underlying layer covering the end portion of the ceramic base body and containing Cu and glass, and a plating layer covering the underlying layer. A Ni content, a Mn content, and a F content in the ceramic base body satisfy the following formulae (1) and (2).

$$26.4 \text{ mol\%} \leq [Ni] \leq 29.5 \text{ mol\%} \quad (1)$$

$$1.65 \leq [Mn]/[Fe] \leq 1.90 \quad (2)$$

In the formulae, [Ni], [Mn], and [Fe] represent the Ni content, the Mn content, and the Fe content (mol%), respectively, provided that a total content of Mn, Ni, and Fe in the ceramic base body is taken as 100 mol%.

FIG. 3

EP 4 708 336 A1

**Description**

Technical Field

The present invention relates to a negative temperature coefficient thermistor.

Background Art

Negative temperature coefficient (NTC) thermistors are known which have a ceramic base body composed of a Mn/Ni/Fe-based ceramic composition (for example, Patent Documents 1 to 3). An outer electrode is provided in end portions of the ceramic base body, in which an underlying layer of the outer electrode is formed by applying a conductive paste containing Ag as a principal component (Ag-based conductive paste) and baking the same.

Citation List

Patent Documents

Patent Document 1: International Publication No. 2017/022373
Patent Document 2: Japanese Unexamined Patent Application Publication No. 2016-54225
Patent Document 3: International Publication No. 2011/086850

Summary of Invention

Technical Problem

Ag is relatively expensive, and is likely to undergo electrochemical migration. Therefore, an idea of employing Cu for the underlying layer, which is relatively inexpensive and less likely to undergo electrochemical migration, is under consideration. However, the present inventors have found that, in the case where a Cu-based conductive paste is employed as the underlying layer and baked, a crack having a depth of about several tens of micrometers may be generated in a surface of the ceramic base body.

Since the crack generated in the ceramic base body leads to a decrease in mechanical strength of the ceramic base body, such a product is determined as defective due to appearance abnormality. Furthermore, when a ceramic base body having a crack is exposed to a high-humidity environment or an environment with a large temperature difference, the crack may extend, and characteristics required of a thermistor may fail to be exerted.

The phenomenon in which a crack is generated in the ceramic base body is not observed in the case where the Ag-based conductive paste is employed for formation of the underlying layer, and therefore, generation of a crack or inhibition thereof has not been studied before. In Patent Documents 1 to 3 as well, it is not recognized that a crack may be generated in the ceramic base body in the case where the Cu-based conductive paste is employed for formation of the underlying layer, and accordingly, no study has been carried out for inhibiting generation of a crack.

In addition, since the negative temperature coefficient thermistor may be used under a high-temperature environment, it is important that the negative temperature coefficient thermistor be not likely to deteriorate in characteristics even when exposed to a high temperature (for example, 150°C) for a long time (that is, having favorable high-temperature resistance).

In view of the above, an object of the present invention is to provide a negative temperature coefficient thermistor that includes an outer electrode having an underlying layer formed from a Cu-based conductive paste, in which generation of a crack in a ceramic base body is inhibited, the thermistor having favorable high-temperature resistance.

Solution to Problem

According to a gist of the present invention, a negative temperature coefficient thermistor is provided which includes:

a ceramic base body composed of a ceramic composition containing Mn, Ni, and Fe; and
an outer electrode provided in an end portion of the ceramic base body, in which
the outer electrode includes an underlying layer covering the end portion of the ceramic base body and containing Cu and glass, and a plating layer covering the underlying layer, and

a Ni content, a Mn content, and a F content in the ceramic base body satisfy the following formulae (1) and (2).

$$26.4 \text{ mol\%} \leq [\text{Ni}] \leq 29.5 \text{ mol\%} \qquad (1)$$

$$1.65 \leq [\text{Mn}]/[\text{Fe}] \leq 1.90 \qquad (2)$$

In the above formulae, [Ni], [Mn], and [Fe] represent the Ni content, the Mn content, and the Fe content (mol%), respectively, provided that a total content of Mn, Ni, and Fe in the ceramic base body is taken as 100 mol%.

Advantageous Effects of Invention

According to the negative temperature coefficient thermistor of the present invention, the underlying layer of the outer electrode is formed from a Cu-based conductive paste, generation of a crack in the ceramic base body is inhibited, and the thermistor has favorable high-temperature resistance.

Brief Description of Drawings

[Fig. 1] Fig. 1 is a schematic perspective view of a negative temperature coefficient thermistor according to a first embodiment.
[Fig. 2] Fig. 2 is a schematic cross-sectional view of the negative temperature coefficient thermistor according to the first embodiment.

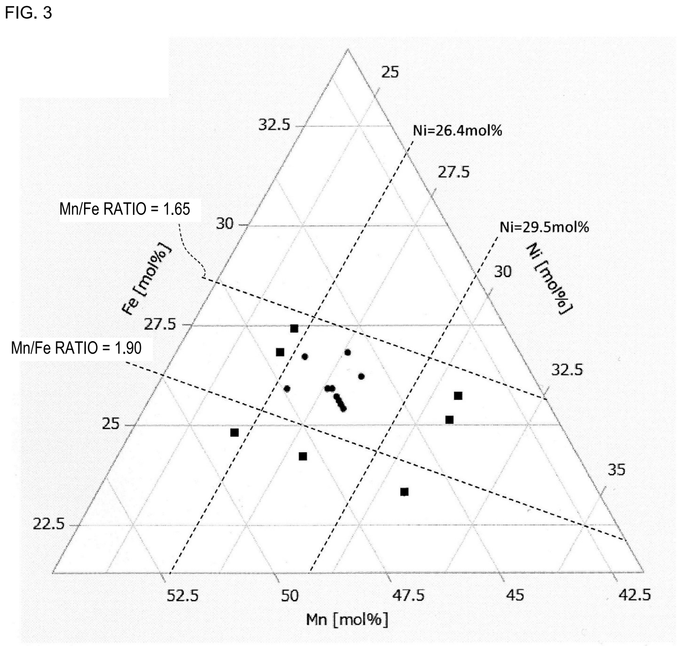

[Fig. 3] Fig. 3 is a ternary diagram showing compositions (Mn-Ni-Fe contents) of ceramic compositions of ceramic base bodies prepared in Examples.
[Fig. 4] Fig. 4 is an optical micrograph of a negative temperature coefficient thermistor of Experiment example No. 1.
[Fig. 5] Fig. 5 is a SEM image of a cross section of the negative temperature coefficient thermistor of Experiment example No. 1.
[Fig. 6] Fig. 6 is a SEM image of a cross section of a negative temperature coefficient thermistor of Experiment example No. 2.
[Fig. 7] Fig. 7 is a graph showing the rate of resistance change before and after a high-temperature storage test for each Experiment example.

Description of Embodiments

The present inventors have found for the first time that, in the case where an underlying layer of an outer electrode of a NTC thermistor is formed by applying a Cu-based conductive paste and baking the same, a crack is generated in a surface of a ceramic base body, and have made an intensive study to find reasons thereof. As a result, the inventors have found that there are the following two factors. The first factor is that the temperature for baking the Cu-based conductive paste is higher than that for a conventional Ag-based conductive paste by 100°C or more. The second factor is that there is a difference in thermal expansion coefficient between an inner portion of the ceramic base body and the surface thereof due to a difference in structure between the surface and the inner portion. The present inventors have found for the first time that a combination of the first and second factors has led to generation of a crack in the ceramic base body.

As a result of a further intensive study for finding reasons for the second factor (the difference in structure between the surface and the inner portion of the ceramic base body), the present inventors have found that, in a ceramic base body composed of a Mn/Ni/Fe-based ceramic composition, a NiO precipitate is observed in the inner portion of the ceramic base body, whereas the NiO precipitate is not observed in the surface of the ceramic base body.

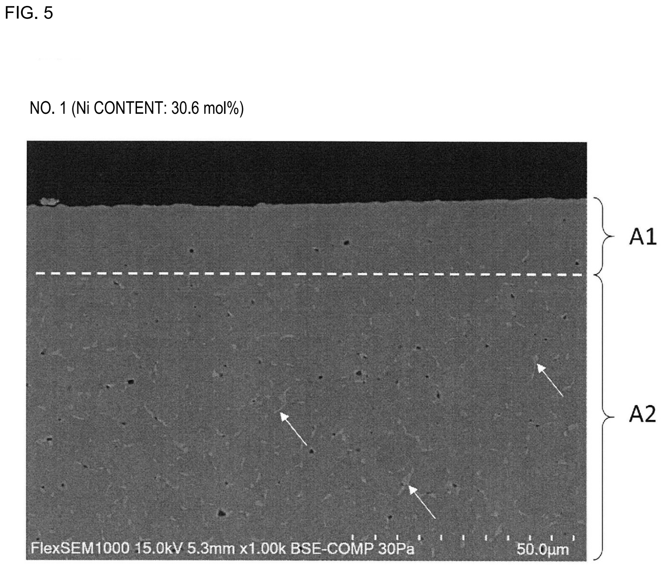

In regard to the behavior of the NiO precipitate, the present inventors have surmised the following mechanism. Ni is incorporated in the ceramic composition to form a solid solution in a process of sintering the ceramic base body, but when the ceramic base body has a large Ni content, some Ni fails to be incorporated but precipitates as NiO. The precipitation of NiO occurs in the entire ceramic base body. However, in a process of cooling the ceramic base body after being held at a predetermined sintering temperature for a predetermined period of time (cooling process), NiO reacts with oxygen in the atmosphere (reoxidation reaction) and then disappears. The reoxidation reaction occurs initially in the surface of the ceramic base body and gradually proceeds toward the inner portion, but the reoxidation reaction does not deeply proceed into the inner portion of the ceramic base body. Therefore, NiO disappears only in the vicinity of the surface of the ceramic base body (for example, in a range up to a depth of 50 $\mu$m from the surface). As a result, the ceramic base body has a non-uniform structure where NiO precipitates are not present in the vicinity of the surface (region A1 in Fig. 5) whereas NiO precipitates are present in the inner portion (region A2 in Fig. 5).

Since the NiO precipitate has a rock-salt structure, which is a different crystal structure from the spinel structure of the Mn/Ni/Fe-based ceramic composition, there is a significant difference in thermal expansion coefficient between the inner portion of the ceramic base body and the vicinity of the surface thereof, and it is therefore considered that the difference results in cracks in the surface of the ceramic base body.

The present inventors have found for the first time that, restricting the Ni content to a predetermined amount (in particular, restricting the upper limit value) leads to inhibition of the NiO precipitation in the inner portion of the ceramic base body, which consequently results in reduction in the difference in thermal expansion coefficient between the inner portion of the ceramic base body and the surface thereof.

The present inventors have further made an intensive study regarding the composition of the ceramic base body for the purpose of inhibiting generation of a crack and, at the same time, improving the high-temperature resistance. The high-temperature resistance can be easily improved by increase in the Ni content. However, the limitation on the upper limit value of the Ni content for inhibiting generation of a crack makes it difficult to improve the high-temperature resistance. The present inventors have found that the high-temperature resistance can be improved by controlling the ratio of the Mn content to the Fe content, and have completed the present invention.

An embodiment of the present invention will be described below with reference to the drawings.

[First embodiment]

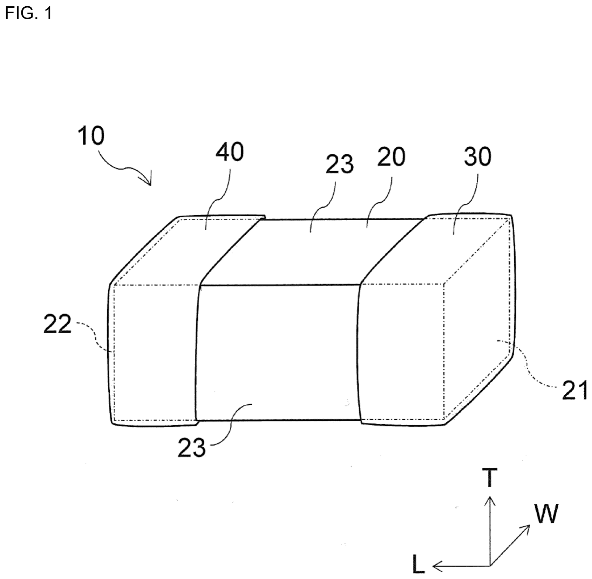

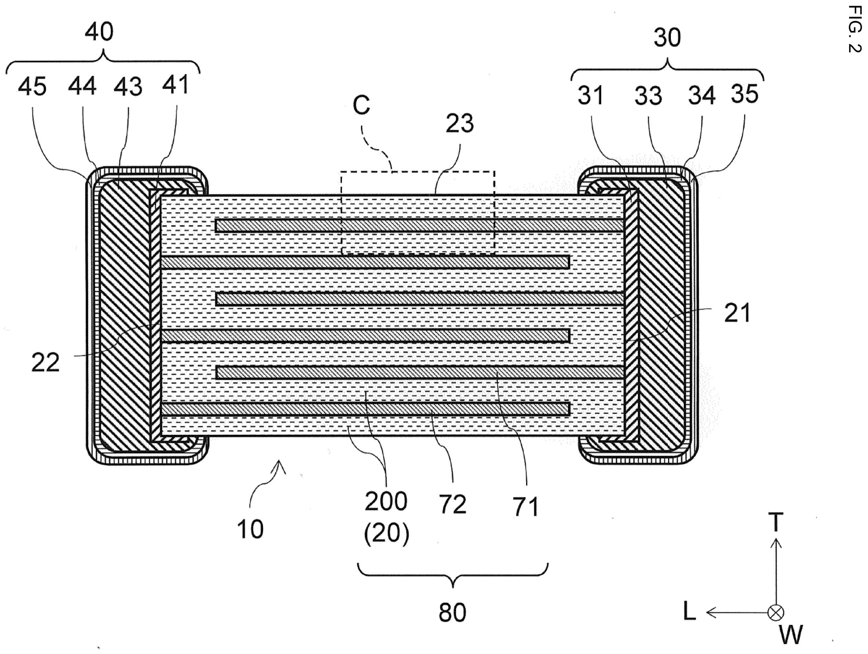

Fig. 1 is a schematic perspective view of a negative temperature coefficient (NTC) thermistor 10 according to a first embodiment of the present invention, and Fig. 2 is a schematic cross-sectional view of the NTC thermistor 10.

The NTC thermistor 10 includes a ceramic base body 20, and outer electrodes 30 and 40 at end portions of the ceramic base body 20.

The outer electrodes 30 and 40 include underlying layers 31 and 41 and plating layers (first plating layers) 34 and 44. The outer electrodes 30 and 40 may further include second electrode layers 33 and 43 between the underlying layers 31 and 41 and the first plating layers 34 and 44, and may further include second plating layers 35 and 45 that cover the first plating layers 34 and 44.

An inner portion of the ceramic base body 20 illustrated in Fig. 2 is provided with internal electrodes 71 and 72 . The ceramic base body 20 (a plurality of ceramic layers 200) and the internal electrodes 71 and 72 are layered on each other to constitute a multilayer body 80.

Each configuration will be described in detail below.

(Ceramic base body 20)

The ceramic base body 20 is composed of a ceramic composition containing Mn, Ni, and Fe. In the NTC thermistor 10 according to the first embodiment, the mole ratio of Ni in the ceramic base body 20 is 26.4 mol% or more and 29.5 mol% or less, provided that the total content of Mn, Ni, and Fe in the ceramic composition is taken as 100 mol%. That is, the ceramic composition satisfies the following formula (1).

$$26.4 \text{ mol\%} \leq [\text{Ni}] \leq 29.5 \text{ mol\%} \qquad (1)$$

In the formula, [Ni] represents the Ni content (mol%), provided that the total content of Mn, Ni, and Fe in the ceramic base body is taken as 100 mol%.

When the Ni content in the ceramic base body 20 is 29.5 mol% or less, generation of a NiO phase can be inhibited and, as a result, a difference in thermal expansion coefficient between the inner portion of the ceramic base body 20 and a surface 23 thereof can be reduced. This can inhibit generation of a crack in the surface 23 of the ceramic base body 20 even when heating to a high baking temperature is performed at the time of forming the underlying layers 31 and 41 from a Cu-based conductive paste.

The Ni content is preferably 29.0 mol% or less, more preferably 28.5 mol% or less, further preferably 28.2 mol% or less.

When the Ni content is 26.4 mol% or more, the amount of Ni incorporated in the ceramic composition to form a solid solution is increased, and therefore, the electrical conductivity of the ceramic base body 20 becomes stable and thus the highly reliable NTC thermistor 10 (in particular, having a favorable high-temperature resistance) can be produced.

The Ni content is preferably 26.7 mol% or more.

In the ceramic base body 20, a ratio of the Mn content to the Fe content (to be referred to as "Mn/Fe ratio") is 1.65 or more and 1.90 or less, provided that the total content of Mn, Ni, and Fe in the ceramic composition is taken as 100 mol%. That is, the ceramic composition satisfies the following formula (2).

$$1.65 \leq [\text{Mn}]/[\text{Fe}] \leq 1.90 \qquad (2)$$

In the formula, [Mn] and [Fe] represent the Mn content and the Fe content (mol%), respectively, provided that the total content of Mn, Ni, and Fe in the ceramic base body is taken as 100 mol%.

In general, the high-temperature resistance of the NTC thermistor is considered to decrease when the Ni content in the ceramic composition is reduced. The present inventors have found that controlling the Mn/Fe ratio within a preferable range is effective for obtaining the NTC thermistor 10 in which generation of a crack is inhibited and which meets market demand regarding the high-temperature resistance.

When the Mn/Fe ratio is 1.65 or more and 1.90 or less, sintering of the ceramic composition is moderately promoted at the time of sintering of the ceramic base body 20 and a resulting crystal structure tends to be stable against heat. As a result, the electrical conductivity of the ceramic base body 20 becomes stable, and thus the highly reliable NTC thermistor 10 (in particular, having a favorable high-temperature resistance) can be produced.

The Mn/Fe ratio is preferably 1.70 or more, more preferably 1.72 or more, particularly preferably 1.74 or more, and preferably 1.85 or less, more preferably 1.83 or less.

The Mn and Fe contents are adjusted so that the Mn/Fe ratio satisfies the formula (2).

The mole ratio of Mn (namely [Mn]) may be set to, for example, 40.5 mol% or more and 50.0 mol% or less, provided that the total content of Mn, Ni and Fe is taken as 100 mol%. [Mn] is preferably more than 45.6 mol%, particularly preferably 46.0 mol% or more, with which the NTC thermistor 10 having a more excellent high-temperature resistance can be obtained.

The mole ratio of Fe (namely [Fe]) may be set to, for example, 20.5 mol% or more and 30.0 mol% or less, provided that the total content of Mn, Ni and Fe is taken as 100 mol%.

The ceramic composition, which contains Mn, Ni and Fe as principal components, may further contain Si, Na, K, Ca, Zr, Co, Ti, Al, Cu, and the like as impurities. These elements as impurities may be contained in a raw material, and/or get mixed in a production process. The impurities being present in the composition are not considered to adversely affect the characteristics of the NTC thermistor as long as the amount of each element is generally 1000 ppm or less while a largest amount thereamong is as small as 5000 ppm or less.

(Internal electrodes 71 and 72)

The NTC thermistor illustrated in Fig. 2 includes the multilayer body 80 having the internal electrodes 71 and 72 and the ceramic layers 200 alternately layered. Note that the multilayer body of the ceramic phases 200 corresponds to the ceramic base body 20. The internal electrodes 71 and 72 are each exposed on a corresponding one of the end surfaces 21 and 22 of the ceramic base body 20, and are electrically connected to the outer electrodes 30 and 40 (the underlying layers 31 and 41 in Fig. 2).

The internal electrodes 71 and 72 may be composed of elemental Ag, Pd, Pt or the like or an alloy containing at least one of them (for example, Ag-Pd).

(Outer electrodes 30 and 40)

The outer electrodes 30 and 40 are provided in at least one of the end portions of the ceramic base body 20, preferably both of the end portions.

The outer electrodes 30 and 40 include the underlying layers 31 and 41 which cover the end surfaces 21 and 22 of the ceramic base body 20 and parts of the surface 23 adjacent to the end surfaces 21 and 22, and the plating layers (the first plating layers 34 and 44) which cover the underlying layers 31 and 41. The second electrode layers 33 and 43 may be included between the underlying layers 31 and 41 and the first plating layers 34 and 44.

(Underlying layers 31 and 41)

The underlying layers 31 and 41 are formed by applying a Cu-based conductive paste and baking the same. The conductive paste generally contains Cu powder being a metal component, a resin, a solvent, and glass powder. Since the resin and the solvent disappear due to the baking, the underlying layers 31 and 41 of the NTC thermistor 10 as a final product are confirmed to be conductive films containing Cu and glass.

The fact that the underlying layers 31 and 41 contain Cu and glass is confirmed by a SEM-EDX analysis. A cross section passing through the underlying layers 31 and 41 is caused to be exposed, and the cross section is subjected to the SEM-EDX analysis so that mapping data of a Cu element and mapping data of a Si element being a glass component are each analyzed. It can be confirmed that Cu is contained when a Cu element is present, and that glass is contained when a Si element is present, in regions corresponding to the underlying layers 31 and 41.

As described above, the factor for generation of a crack in the ceramic base body 20 is that the underlying layers 31 and 41 are formed by baking the Cu-based conductive paste while NiO is left in the inner portion of the ceramic base body 20. Exposure to a high temperature such as the temperature for baking the Cu-based conductive paste causes a stress on the surface 23 of the ceramic base body 20 due to a difference in thermal expansion coefficient between the inner portion and the surface 23, resulting in generation of a crack.

In the first embodiment, the Ni content is reduced as compared to conventional Mn-Ni-Fe-based ceramic compositions, thereby reducing precipitation of NiO itself. Consequently, the amount of expansion of the inner portion of the ceramic base body 20 is equal to that of the surface 23 even when the ceramic base body 20 is exposed to a high temperature such as the temperature at the time of baking the Cu-based conductive paste, and therefore such stress that causes cracks is not generated in the surface 23 of the ceramic base body 20.

(Second electrode layers 33 and 43)

The second electrode layers 33 and 43 are optionally provided.

The second electrode layers 33 and 43 are formed from a material that can be electrically connected with the underlying layers 31 and 41, protect the underlying layers 31 and 41, and allow the plating layers to be formed on the surfaces thereof. The second electrode layers 33 and 43 can be formed from, for example, at least one of a conductive resin layer, a baked electrode layer, and the like. The conductive resin layer is formed from a conductive resin material containing a resin and conductive powder.

(Plating layers (first plating layers 34 and 44 and second plating layers 35 and 45))

The plating layers may be formed of single plating layers (for example, only the first plating layers 34 and 44), or have multilayer structures each composed of a plurality of plating layers (for example, two-layer structures composed of the first plating layers 34 and 44 and the second plating layers 35 and 45).

Specific examples of the multilayer structure include a two-layer structure such as Ni-Sn and Ni-Au, and a three-layer structure such as Cu-Ni-Sn and Ni-Pd-Au.

In the example illustrated in Fig. 2, the first plating layers 34 and 44 which cover the second electrode layers 33 and 43, and the second plating layers 35 and 45 which cover the first plating layers 34 and 44 are provided.

Although the example in Fig. 2 illustrates the first plating layers 34 and 44 covering the underlying layers 31 and 41 with the second electrode layers 33 and 43 interposed therebetween, the first plating layers 34 and 44 are to directly cover the underlying layers 31 and 41 in the case where the optional second electrode layers 33 and 43 are not included.

[Method of producing NTC thermistor 10]

One example of a method of producing the NTC thermistor 10 according to the first embodiment will be described below with reference to Fig. 2.

(Formation of ceramic base body 20)

First, predetermined amounts of $Mn_3O_4$, $Fe_2O_3$, and NiO are weighed as raw materials of the ceramic composition which composes the ceramic base body 20. Note that a ratio of each metal element in the weighed raw materials can be regarded as substantially the same as a ratio of a corresponding metal element in the ceramic composition which composes the ceramic base body of the resulting NTC thermistor. The weighed raw materials are put in a ball mill with grinding media such as zirconia balls incorporated therein and sufficiently subjected to wet grinding, and subsequently calcined at a predetermined temperature, thereby preparing ceramic powder. An organic binder is added to the resulting ceramic powder, and the mixture is subjected to a wet mixing process to be formed into slurry, followed by a shaping process by a doctor blade method or the like, thereby preparing a ceramic green sheet. Although the metal oxides such as $Mn_3O_4$, $Fe_2O_3$, and NiO are used as raw materials of the ceramic composition composing the ceramic base body in the present embodiment, carbonates, hydroxides, and the like of the elements Mn, Fe, and Ni may be used as the raw materials.

Next, a paste for internal electrodes containing Ag-Pd or Pd as a principal component is applied onto the ceramic green sheet, thereby forming an internal electrode pattern. The paste for internal electrodes may be applied by, for example, screen printing or the like. A predetermined number of ceramic green sheets each having the internal electrode pattern applied thereon are layered and then sandwiched by ceramic green sheets having no internal electrode pattern from the upper and lower sides, followed by pressure bonding, thereby preparing a multilayer body. The multilayer body is cut to have predetermined dimensions, and housed in, for example, a zirconia sagger and subjected to a debindering treatment, followed by firing at a predetermined temperature (for example, 1100 to 1200°C), thereby forming the ceramic base body 20 with the internal electrodes 71 and 72 disposed in the inner portion.

(Formation of underlying layers 31 and 41)

The underlying layers 31 and 41 are formed so as to cover the end portions of the ceramic base body 20 (in the example illustrated in Fig. 2, the end surfaces 21 and 22 and parts of the surface 23 of the ceramic base body 20). Note that the underlying layers 31 and 41 may be formed so as to cover only the end surfaces 21 and 22 of the ceramic base body 20.

In the NTC thermistor 10 according to the first embodiment, a conductive material containing Cu as a principal component is used as a material for the underlying layers 31 and 41. The Cu-based underlying layer is advantageous in that it is inexpensive and less likely to undergo electrochemical migration as compared to conventional Ag-based underlying layers. For the underlying layers 31 and 41, a coating method (coating a predetermined place with the Cu-based conductive paste, followed by baking) is employed. The baking is performed under an inert gas atmosphere, under conditions in which the highest temperature is 800 to 900°C, and an accumulated heat at or above 750°C is 100000 to 150000°C·s.

Since the temperature for baking the Cu-based conductive paste is higher by about 100°C or more than that for baking a Ag-based conductive paste, the amount of thermal expansion of the ceramic base body is large. However, by controlling the composition of the ceramic base body 20, generation of a crack in the surface of the ceramic base body 20 can be inhibited even under heating up to the temperature for baking the Cu-based conductive paste.

(Formation of second electrode layers 33 and 43)

The second electrode layers 33 and 43 may be formed so as to cover the underlying layers 31 and 41.

The material for the second electrode layers 33 and 43 is not limited as long as the material can be electrically connected with the underlying layers 31 and 41, protect the underlying layers 31 and 41, and allow the plating layers to be formed on the surfaces thereof. The second electrode layers 33 and 43 are formed from, for example, a conductive resin layer.

The conductive resin layer is formed by curing a flowable paste for resin electrodes. The paste for resin electrodes contains conductive powder and a resin raw material. The paste for resin electrodes is applied to the end portions of the ceramic base body 20 so as to cover the underlying layers 31 and 41, and then the resin raw material in the paste for resin electrodes is cured.

Examples of the conductive powder contained in the paste for resin electrodes include metal powders such as Ag, Au, Ni, Cu, Pt, Pd, and Al powders.

Examples of the resin raw material contained in the paste for resin electrodes include, for example, epoxy resin, phenol resin, urethane resin, silicone resin, and polyimide resin raw materials.

(Formation of first plating layers 34 and 44 and second plating layers 35 and 45)

The plating layers (the first plating layer 34 and the second plating layer 35) are formed so as to cover the surfaces of the second electrode layers 33 and 43. The plating layer preferably has a multilayer structure. Specific examples of the multilayer structure include a two-layer structure such as Ni-Sn or Ni-Au, and a three-layer structure such as Cu-Ni-Sn or Ni-Pd-Au.

In the example in Fig. 2, the plating layers have a two-layer structure, in which the first plating layers 34 and 44 cover the second electrode layers 33 and 43, and the first plating layers 34 and 44 are covered with the second plating layers 35 and 45.

The first plating layers 34 and 44 can be formed by, for example, electrolytic plating with at least one of Ni and Cu. The second plating layers 35 and 45 can be formed by, for example, electrolytic plating with at least one of Sn and Au. In this manner, the plating layers having the two-layer structure can be formed.

Third plating layers may be further provided between the first plating layers 34 and 44 and the second plating layers 35 and 45, thereby providing a three-layer structure. The third plating layers can be formed by, for example, electrolytic plating with at least one of Ni and Pd.

The first plating layers 34 and 44 and the second plating layers 35 and 45 (and the third plating layers) can be formed by a known plating method such as, for example, barrel plating with balls.

EXAMPLES

NTC thermistors of Experiment example Nos. 1 to 17 were produced according to the following procedure. First, $Mn_3O_4$ powder, $Fe_2O_3$ powder, and NiO powder were prepared as raw materials of a ceramic composition which constitutes a ceramic base body, and the powders were weighed according to the compositions shown in Table 1. Note that the values in the columns of "Mn", "Fe", and "Ni" in Table 1 represent mole ratios (mol%) of Mn, Fe, and Ni, provided that the total content of Mn elements, Fe elements, and Ni elements in the raw materials is taken as 100 mol%.

Note that the underlines in Table 1 indicate that the numerical values are out of the numerical range specified in the embodiment of the present invention.

The weighed raw materials were put in a ball mill with grinding media such as zirconia balls incorporated therein and sufficiently subjected to wet grinding, and subsequently calcined at 800°C for 2 hours, thereby preparing ceramic powder. An organic binder was added to the resulting ceramic powder, and the mixture was subjected to a wet mixing process to be formed into slurry. The slurry was subjected to a shaping process by a doctor blade method, thereby preparing a ceramic green sheet.

Next, a paste for internal electrodes was applied onto the ceramic green sheet by screen printing, thereby forming an internal electrode pattern. Note that the paste for internal electrodes employed in Experiment example Nos. 1 to 17 contained metal powder composed of an Ag-Pd alloy (mixing ratio: 30% by weight of Ag and 70% by weight of Pd) as a principal component. A plurality of ceramic green sheets each having the internal electrode pattern applied thereon were layered such that the respective internal electrode patterns are opposed to each other with the ceramic green sheets interposed therebetween, and then sandwiched by ceramic green sheets having no internal electrode pattern from the upper and lower sides, followed by pressure bonding, thereby preparing a multilayer body. The multilayer body was cut to have dimensions of 1.2 mm in length, 0.6 mm in width, and 0.6 mm in thickness, and housed in a zirconia sagger and subjected to a debindering treatment, followed by firing at a temperature of 1100 to 1200°C, thereby preparing a ceramic base body 20 having internal electrodes 71 and 72 in the inner portion.

The end portions of the resulting ceramic base body 20 were coated with a Cu-based conductive paste containing Cu as a principal component, glass, an epoxy resin, and an alcohol-based organic solvent, and baked under an inert gas atmosphere at 900°C, thereby forming underlying layers 31 and 41. The surfaces of the underlying layers 31 and 41 were subjected to electrolytic plating so that first plating layers 34 and 44 composed of Ni were formed thereon, and second plating layers 35 and 45 composed of Sn were further formed thereon.

The NTC thermistors of Experiment example Nos. 1 to 17 obtained in the above manner were subjected to the following tests (measurements).

[SEM observation]

The NTC thermistors of Experiment example Nos. 1, 2, 8, 9, 10, 16, and 17 were shaved up to the vicinity of the center portion with respect to the W direction so that a cross-sectional TL surface was exposed (see Fig. 1). The cross section (TL surface) was taken as an observation surface and pre-treated, and a SEM observation was performed in the vicinity of region C enclosed by the dashed line in Fig. 2. Various conditions were as follows.

- SEM device: Scanning electron microscope FlexSEM 1000 II (Hitachi High-Tech Corporation) - Magnification: 1000x
- Pre-treatment of observation surface: Carbon sputtering (30 nm thick)
- Type of electron image: Backscattered electron image
- Acceleration voltage: 15.0 kV
- WD (working distance): About 5 mm
- Field of view: 127.0 $\mu$m $\times$ 95.3 $\mu$m

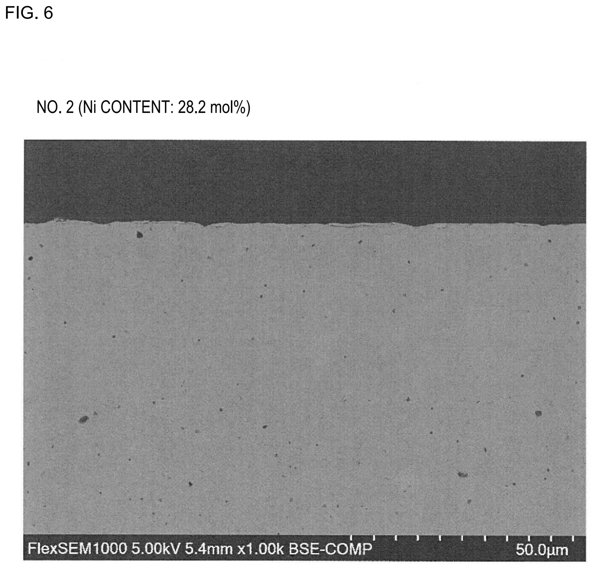

Among SEM images obtained, SEM images of the NTC thermistors of Experiment example Nos. 1 and 2 are shown in Fig. 5 and Fig. 6, respectively.

[Crack generation rate]

Presence or absence of cracks generated in the NTC thermistors of Experiment example Nos. 1 to 17 was observed under the following conditions.

- Microscope: Greenough-type stereomicroscope SMZ745 (Nikon Corporation)
- Magnification: 100x
- The number of NTC thermistors observed: 17500

For each of the NTC thermistors, all the surfaces (4 surfaces) of the ceramic substrate 20 not covered with the outer electrode were observed through the microscope, so that the presence or absence of cracks was confirmed. All the cracks observed at the above magnification were regarded as "cracks", without limitation on the orientation or length of the cracks, or the surface or position where the cracks were observed.

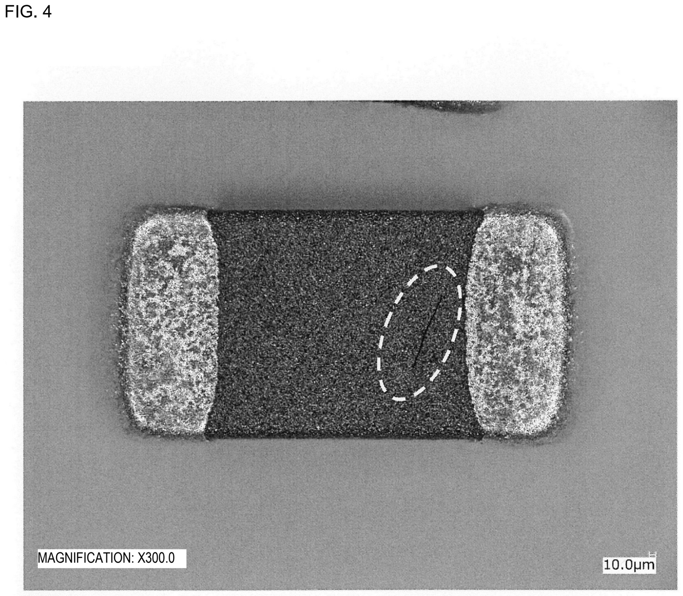

Fig. 4 shows an optical micrograph of Test example 1, in which it can be confirmed that a crack was generated in the part enclosed by the dashed line.

The number of NTC thermistors in which one or more cracks were found was counted, and divided by the number of NTC thermistors observed (17500), thereby calculating the crack generation rate (%). The cases where the crack generation rate was 0% were regarded as acceptable.

[High-temperature resistance test]

For each of the NTC thermistors of Experiment example Nos. 1 to 17, the rate of resistance change before and after a high-temperature resistance test (storage for 1000 hours under a temperature of 150°C) was obtained. First, the resistance of the NTC thermistor before the high-temperature resistance test was measured by a 4-terminal method at room temperature (25°C) (the resistance is represented by "resistance $R_{25}(0h)$" or simply "$R_{25}(0h)$"). Subsequently, the resistance of the NTC thermistor after being left under a temperature of 150°C for 1000 hours was measured at room temperature (25°C) (the resistance is represented by "resistance $R_{25}(1000h)$" or simply "$R_{25}(1000h)$"). The resistance change rate $\Delta R/R$ was calculated according to the following formula (5). Note that "0h" in parentheses means that the high-temperature resistance test time equals 0 hours, that is, the physical property value relates to the NTC thermistor before the high-temperature resistance test, whereas "1000h" means that the physical property value relates to the NTC thermistor after being subjected to the high-temperature resistance test for 1000 hours.

$$\Delta R/R \ (\%) = \{R_{25}(1000h) - R_{25}(0h)\}/R_{25}(0h) \times 100 \quad (5)$$

The number N of samples was set to 80, and an arithmetic mean of the resulting resistance change rates $\Delta R/R$ was obtained. A case where the mean $\Delta R/R$ was out of a range of ±3.0% was determined as "not good", a case within a range of ±3.0% was determined as "good", and a case within a range of ±2.0% was determined as "excellent".

Measurement results are shown in Table 2. Note that the numerical values determined as "unacceptable" in the crack generation rate test and the numerical values determined as "not good" in the high-temperature resistance test are underlined in Table 2.

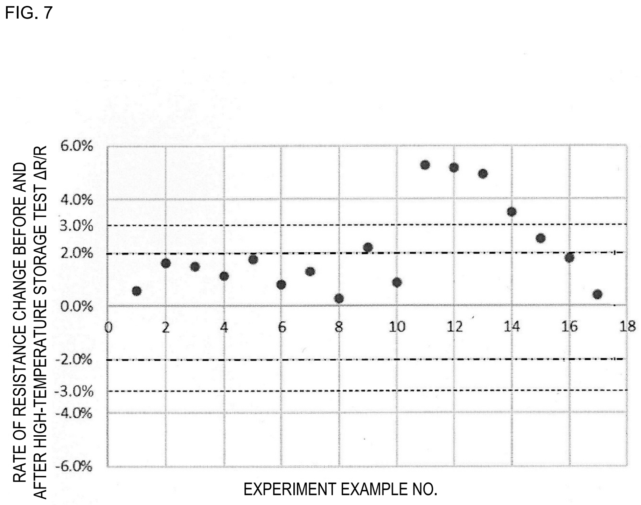

In addition, results of the temperature resistance test (rates of resistance change before and after the high-temperature storage test) are shown in Fig. 7.

[Table 1]

| Experiment example No. | Mn [mol%] | Fe [mol%] | Ni [mol%] | Total of Mn, Fe, and Ni [mol%] | Mn/Fe ratio |
|---|---|---|---|---|---|
| 1 | 46.1 | 23.3 | <u>30.6</u> | 100 | <u>1.98</u> |
| 2 | 46.4 | 25.4 | 28.2 | 100 | 1.83 |
| 3 | 46.4 | 25.5 | 28.1 | 100 | 1.82 |
| 4 | 46.4 | 25.6 | 28.0 | 100 | 1.81 |
| 5 | 46.4 | 25.7 | 27.9 | 100 | 1.81 |
| 6 | 46.4 | 25.9 | 27.7 | 100 | 1.79 |
| 7 | 46.5 | 25.9 | 27.6 | 100 | 1.80 |
| 8 | 46.6 | 26.7 | 26.7 | 100 | 1.75 |
| 9 | 45.6 | 26.2 | 28.2 | 100 | 1.74 |
| 10 | 47.4 | 25.9 | 26.7 | 100 | 1.83 |
| 11 | 47.9 | 24.2 | 27.9 | 100 | <u>1.98</u> |
| 12 | 49.1 | 24.8 | <u>26.1</u> | 100 | <u>1.98</u> |
| 13 | 47.1 | 26.8 | <u>26.1</u> | 100 | 1.76 |
| 14 | 46.5 | 27.4 | <u>26.1</u> | 100 | 1.70 |
| 15 | 45.6 | 26.8 | 27.6 | 100 | 1.70 |
| 16 | 43.7 | 25.7 | <u>30.6</u> | 100 | 1.70 |
| 17 | 44.2 | 25.1 | <u>30.7</u> | 100 | 1.76 |

[Table 2]

| Experiment example No. | Crack generation rate (%) | High-temperature resistance test (storage at 150°C for 1000 hours) |
| --- | --- | --- |
| | | Rate of resistance change before and after test ΔR/R (%) |
| 1 | 0.20% | 0.6% |
| 2 | 0 | 1.6% |
| 3 | 0 | 1.5% |
| 4 | 0 | 1.1% |
| 5 | 0 | 1.8% |
| 6 | 0 | 0.8% |
| 7 | 0 | 1.3% |
| 8 | 0 | 0.3% |
| 9 | 0 | 2.2% |
| 10 | 0 | 0.9% |
| 11 | 0 | 5.3% |
| 12 | 0 | 5.2% |
| 13 | 0 | 5.0% |
| 14 | 0 | 3.5% |
| 15 | 0 | 2.5% |
| 16 | 0.22% | 1.8% |
| 17 | 0.17% | 0.4% |

The results shown in Tables 1 and 2 will be discussed.

(Regarding crack generation rate)

In the NTC thermistors of Experiment example Nos. 1, 16, and 17, the Ni content in the ceramic base body 20 exceeded the range specified in the first embodiment. In the above NTC thermistors, generation of a crack was observed (that is, "crack generation rate" was more than 0%).

As shown in Fig. 5, in the SEM image of the NTC thermistor of Experiment example No. 1, no NiO phase was found in region A1 being on the surface side of the ceramic base body 20, but spot-like white parts (NiO phases) were found in region A2 being on the inner side relative to region A1. For example, some of the white parts are indicated by arrows. In the SEM images of the NTC thermistors of Experiment example Nos. 16 and 17 as well, region A1 (a region without NiO phase) and region A2 (an inner region having a NiO phase) were observed.

On the other hand, in the NTC thermistors of Experiment example Nos. 2 to 15, the Ni content in the ceramic base body 20 was within the range specified in the first embodiment. In the above NTC thermistors, generation of a crack was not observed (that is, "crack generation rate" was 0%).

As shown in Fig. 6, in the SEM image of the NTC thermistor of Experiment example No. 2, no NiO phase was found throughout the whole ceramic base body 20. In the Experiment example Nos. 8, 9, and 10 as well, no NiO phase was found.

It was confirmed from the Ni contents, SEM images, and the results of measurement of the crack generation rate that the Ni content in the ceramic substrate 20 exceeding a predetermined range causes a NiO phase in the inner portion of the ceramic base body 20, resulting in generation of a crack in the surface of the ceramic base body 20.

(Regarding high-temperature resistance)

In the NTC thermistors of Experiment example Nos. 11, 12, 13, and 14, since the Ni content in the ceramic substrate 20 was less than the lower limit (26.4 mol%) and/or the Mn/Fe ratio was more than the upper limit (1.90), which caused unstable electrical conductivity, the high-temperature resistance was determined as "not good" (ΔR/R (%) was out of a range of ±3.0%) (see Fig. 7).

In the NTC thermistor of Experiment example No. 1, the Mn/Fe ratio of the ceramic substrate 20 was more than the upper limit (1.90). However, the content of Ni, which contributes to improve the high-temperature resistance, was large (above "29.5 mol%" being a threshold for NiO phase generation), which is considered to have led to the determination "good" regarding the high-temperature resistance.

On the other hand, in the NTC thermistors of Experiment example Nos. 2 to 10 and 15 to 17, the Ni content in the ceramic substrate 20 was more than or equal to the lower limit (26.4 mol%), and the Mn/Fe ratio was less than or equal to the upper limit (1.90). For this reason, the high-temperature resistance was determined as "good" ($\Delta$R/R (%) was within a range of $\pm$3.0%).

In particular, in the NTC thermistors of Experiment example Nos. 2 to 8, 10, 16, and 17, since the Mn content in the ceramic substrate 20 was more than 45.6 mol%, the high-temperature resistance was determined as "excellent" ($\Delta$R/R (%) was within a range of $\pm$2.0%).

The present invention may include the following aspects.

(Aspect 1)

A negative temperature coefficient thermistor including:

a ceramic base body composed of a ceramic composition containing Mn, Ni, and Fe; and
an outer electrode provided in an end portion of the ceramic base body, in which
the outer electrode includes an underlying layer covering the end portion of the ceramic base body and containing Cu and glass, and a plating layer covering the underlying layer, and
a Ni content, a Mn content, and a F content in the ceramic base body satisfy the following formulae (1) and (2):

$$26.4 \text{ mol\%} \leq [\text{Ni}] \leq 29.5 \text{ mol\%} \qquad (1)$$

$$1.65 \leq [\text{Mn}]/[\text{Fe}] \leq 1.90 \qquad (2)$$

where [Ni], [Mn], and [Fe] represent the Ni content, the Mn content, and the Fe content (mol%), respectively, provided that a total content of Mn, Ni, and Fe in the ceramic base body is taken as 100 mol%.

(Aspect 2)

The negative temperature coefficient thermistor according to aspect 1, in which the plating layer includes a plurality of plating layers.

(Aspect 3)

The negative temperature coefficient thermistor according to aspect 1 or 2, further including: an internal electrode in an inner portion of the ceramic base body.

This application claims priority from Japanese Patent Application No. 2023-107328, filed on June 29, 2023 in Japan, all of which are incorporated herein by reference.

Reference Signs List

10 negative temperature coefficient (NTC) thermistor
20 ceramic base body
21, 22 end surface of ceramic base body
23 surface of ceramic base body
30, 40 outer electrode
31, 41 underlying layer
33, 43 second electrode layer
34, 44 first plating layer
35, 45 second plating layer
71, 72 internal electrode

**Claims**

1.  A negative temperature coefficient thermistor comprising:

    a ceramic base body composed of a ceramic composition containing Mn, Ni, and Fe; and
    an outer electrode provided in an end portion of the ceramic base body, wherein
    the outer electrode includes an underlying layer covering the end portion of the ceramic base body and containing Cu and glass, and a plating layer covering the underlying layer, and
    a Ni content, a Mn content, and a F content in the ceramic base body satisfy the following formulae (1) and (2):

    $$26.4 \text{ mol\%} \leq [\text{Ni}] \leq 29.5 \text{ mol\%} \qquad (1)$$

    $$1.65 \leq [\text{Mn}]/[\text{Fe}] \leq 1.90 \qquad (2)$$

    where [Ni], [Mn], and [Fe] represent the Ni content, the Mn content, and the Fe content (mol%), respectively, provided that a total content of Mn, Ni, and Fe in the ceramic base body is taken as 100 mol%.

2.  The negative temperature coefficient thermistor according to claim 1, wherein
    the plating layer includes a plurality of plating layers.

3.  The negative temperature coefficient thermistor according to claim 1 or 2, further comprising:
    an internal electrode in an inner portion of the ceramic base body.

FIG. 1

FIG. 2

FIG. 3

FIG. 4

MAGNIFICATION: X300.0

10.0μm

FIG. 5

NO. 1 (Ni CONTENT: 30.6 mol%)

FIG. 6

NO. 2 (Ni CONTENT: 28.2 mol%)

FlexSEM1000 5.00kV 5.4mm x1.00k BSE-COMP                    50.0μm

FIG. 7

RATE OF RESISTANCE CHANGE BEFORE AND
AFTER HIGH-TEMPERATURE STORAGE TEST ΔR/R

EXPERIMENT EXAMPLE NO.

# INTERNATIONAL SEARCH REPORT

International application No.

**PCT/JP2024/019264**

## A. CLASSIFICATION OF SUBJECT MATTER

*H01C 7/04*(2006.01)i; *C04B 35/01*(2006.01)i
FI: H01C7/04; C04B35/01 600

According to International Patent Classification (IPC) or to both national classification and IPC

## B. FIELDS SEARCHED

Minimum documentation searched (classification system followed by classification symbols)

H01C7/04; C04B35/01

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| Y | JP 6-263518 A (SIEMENS MATSUSHITA COMPONENTS GESELLSCHAFT MIT BESCHRANKTER HAFTUNG & COMPANY KOMMANDITGESELLSCHAFT) 20 September 1994 (1994-09-20) paragraphs [0001], [0017]-[0019] | 1-3 |
| Y | WO 2016/129300 A1 (MURATA MANUFACTURING CO., LTD.) 18 August 2016 (2016-08-18) paragraphs [0039]-[0046] | 1-3 |
| A | WO 2011/086850 A1 (MURATA MANUFACTURING CO., LTD.) 21 July 2011 (2011-07-21) | 1-3 |

☐ Further documents are listed in the continuation of Box C.    ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 July 2024** | **23 July 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | Telephone No. |

Form PCT/ISA/210 (second sheet) (July 2022)

20

## INTERNATIONAL SEARCH REPORT
### Information on patent family members

International application No.

**PCT/JP2024/019264**

| Patent document cited in search report | | | Publication date (day/month/year) | Patent family member(s) | | | Publication date (day/month/year) |
|---|---|---|---|---|---|---|---|
| JP | 6-263518 | A | 20 September 1994 | EP | 609776 | A1 | |
| WO | 2016/129300 | A1 | 18 August 2016 | CN | 107210106 | A | |
| | | | | TW | 201629994 | A | |
| WO | 2011/086850 | A1 | 21 July 2011 | US | 2012/0268234 | A1 | |
| | | | | TW | 201139326 | A | |
| | | | | CN | 102686532 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017022373 A
- JP 2016054225 A
- JP 2011086850 A
- JP 2023107328 A